(19) Europäisches Patentamt
European Patent Office
Office européen des brevets

(11) **EP 1 014 086 B1**

(12) **FASCICULE DE BREVET EUROPEEN**

(45) Date de publication et mention
de la délivrance du brevet:
**04.07.2007 Bulletin 2007/27**

(51) Int Cl.:
**_G01N 29/24_** *(2006.01)*

(21) Numéro de dépôt: **99403185.4**

(22) Date de dépôt: **17.12.1999**

(54) **Procédé et installation de mesure d'atténuation ultrasonore pour le contrôle non destructif par ultrasons laser**

Verfahren und Vorrichtung zur Messung der Ultraschalldämpfung zur zerstörungsfreien Prüfung durch Laser-Ultraschall

Method and device for measuring the ultrasonic attenuation for the nondestructive testing with laser-ultrasound

(84) Etats contractants désignés:
**AT BE CH CY DE DK ES FI FR GB GR IE IT LI LU MC NL PT SE**

(30) Priorité: **22.12.1998 FR 9816253**

(43) Date de publication de la demande:
**28.06.2000 Bulletin 2000/26**

(73) Titulaires:
• **AEROSPATIALE MATRA**
**75116 Paris (FR)**
• **DASSAULT AVIATION**
**F-75008 Paris (FR)**

(72) Inventeurs:
• **Petillon, Odile**
**92100 Boulogne Billancourt (FR)**
• **Voillaume, Hubert**
**75014 Paris (FR)**

(74) Mandataire: **Poulin, Gérard et al**
**BREVALEX**
**3, rue du Docteur Lancereaux**
**75008 Paris (FR)**

(56) Documents cités:
US-A- 4 659 224     US-A- 5 585 921
US-A- 5 760 904

## Description

### Domaine technique

l'invention concerne un procédé de mesure d'atténuation ultrasonore, pour le contrôle non destructif. Ce procédé utilise la technique des ultrasons laser, selon laquelle des ondes ultrasonores sont créées dans une pièce à contrôler, à l'aide d'un premier faisceau laser dit "de génération" et détectées par un deuxième faisceau laser dit, "de détection".
L'invention concerne également une installation mettant en oeuvre ce procédé.
Le procédé et l'installation selon l'invention s'appliquent au contrôle non destructif de pièces de toute nature, métalliques ou en matières plastiques, composites ou non composites.

### Etat de la technique

Le contrôle non destructif par ultrasons est très utilisé dans l'industrie. Un transducteur, généralement piézoélectrique, permet d'envoyer dans la pièce des impulsions ultrasonores. Dans la méthode dite "en réflexion", le même transducteur capte les échos renvoyés par la face avant et le fond de la pièce ainsi que par d'éventuelles hétérogénéités présentes dans celle-ci.
Cette technique traditionnelle de contrôle ultrasonore permet de détecter la présence d'une hétérogénéité, de la localiser et de la dimensionner. Ainsi, l'existence d'une hétérogénéité est révélée par la présence d'un écho supplémentaire entre l'écho de surface et l'écho de fond ou par une variation notable de l'écho de fond. La localisation de cette hétérogénéité en profondeur est assurée en mesurant le temps entre cet écho supplémentaire et l'écho de surface, qui correspond au temps de propagation aller et retour de l'onde ultrasonore dans la pièce. Par ailleurs, la santé du matériau est évaluée en mesurant l'amplitude de l'écho de fond.
Plus récemment et comme l'illustre notamment le document US-A-4 659 224, on a développé la technique du contrôle non destructif des pièces par ultrasons laser. Selon cette technique, au lieu d'être créées directement par un transducteur piézoélectrique, les ondes ultrasonores sont générées dans la pièce par un premier faisceau laser dit "de génération" et un deuxième faisceau laser, dit "de détection", est utilisé pour la détection. Cette technique a notamment pour avantage de permettre d'effectuer le contrôle directement dans l'air, au lieu de nécessiter la présence de "couplant" (eau, gel, graisse, etc.) entre le transducteur et la pièce comme dans le procédé de contrôle ultrasonore traditionnel. Cela permet, de façon générale, de contrôler des pièces de grandes dimensions et de géométrie complexe.
De façon plus précise et comme le décrit en détail le document US-A-4 659 224 déjà cité, la technique de contrôle non destructif par ultrasons laser consiste à diriger sur la face avant de la pièce un faisceau laser de génération pulsé. L'impact de ce faisceau sur la pièce a pour effet d'induire dans celle-ci des ondes ultrasonores. Comme dans la technique classique de contrôle par ultrasons, ces ondes ultrasonores génèrent des échos lorsqu'elles rencontrent des hétérogénéités et lorsqu'elles atteignent le fond de la pièce. Lorsqu'ils atteignent la face avant de la pièce, ces échos engendrent des déplacements infimes de celle-ci. Pour assurer la détection de ces ondes ultrasonores, on utilise un laser de détection à impulsions longues et à raie très étroite. En raison de l'effet Doppler, le déplacement de la face avant de la pièce produit par chacun des échos ultrasonores se traduit par une variation de la longueur d'onde de l'impulsion laser réfléchie par la surface de la pièce, que l'on appellera par la suite "décalage Doppler".
En détectant l'impulsion laser réfléchie par la pièce, on dispose donc d'un signal optique dont la fréquence présente un décalage Doppler au temps d'arrivée de chacun des échos ultrasonores sur la face avant de la pièce. Un interféromètre de Fabry-Pérot permet de transformer chaque décalage Doppler en une variation d'intensité. Cette variation d'intensité se superpose au signal global représentatif de l'intensité lumineuse de l'impulsion laser réfléchie par la pièce.
Dans son état actuel, ce procédé de contrôle par ultrasons laser permet de détecter et de localiser les hétérogénéités. En effet, comme lorsqu'on utilise la technique de contrôle ultrasonore classique, la présence d'un écho intermédiaire entre l'écho de surface et l'écho de fond ou une variation importante de l'écho de fond révèle l'existence d'une hétérogénéité, et la distance entre ces différents échos, qui correspond comme précédemment à des temps de propagation aller et retour de l'onde ultrasonore dans la pièce, permet de localiser cette hétérogénéité en profondeur.
En revanche, la technique de contrôle par ultrasons laser ne permet pas, à ce jour, de quantifier avec précision l'atténuation induite par une hétérogénéité.
Ces limites actuelles du procédé de contrôle par ultrasons laser ont notamment pour origine l'évolution dans le temps de l'intensité lumineuse de chaque impulsion du laser de détection. Pour un laser du type Nd : YAG pompé par lampe flash, ces impulsions présentent en effet une forme quasi gaussienne. De ce fait, les signaux haute fréquence correspondant aux échos ultrasonores, détectés à la sortie de l'interféromètre de Fabry-Pérot, sont superposés à une impulsion dont le niveau ou l'intensité lumineuse varie pendant la durée de la mesure. La sensibilité de détection est donc elle aussi évolutive, car proportionnelle à l'intensité lumineuse analysée. Une comparaison entre l'amplitude des différents signaux haute fréquence ne permet pas d'envisager des mesures quantitatives précises.

**EP 1 014 086 B1**

**Exposé de l'invention**

L'invention a précisément pour objet un procédé de contrôle d'une pièce par ultrasons laser, dont la conception originale lui permet, outre la détection et la localisation des hétérogénéités, une quantification précise de l'atténuation ultrasonore qu'elles engendrent, autorisant notamment une détermination du coefficient d'absorption ultrasonore de la pièce.

Conformément à l'invention, ce résultat est obtenu au moyen d'un procédé de contrôle d'une pièce par ultrasons laser, selon lequel :

- on dirige un faisceau de détection, issu d'un laser impulsionnel, sur une zone de mesure de la pièce ;
- on détecte l'impulsion laser réfléchie par la pièce, pendant un temps de mesure prédéterminé, ladite impulsion incluant des décalages Doppler engendrés par la réflexion d'ondes ultrasonores sur ladite zone de mesure ; et
- on transforme chaque décalage Doppler en un pic d'intensité superposé à l'intensité de l'impulsion réfléchie ;

procédé caractérisé en ce qu'on écrête l'intensité de chaque impulsion incidente du faisceau laser de détection, pour donner à l'intensité de l'impulsion réfléchie une valeur constante pendant une durée au moins égale audit temps de mesure.

Ainsi, selon l'invention, la principale cause des limites actuelles du procédé de contrôle par ultrasons laser, à savoir l'évolution dans le temps de l'intensité lumineuse d'une impulsion du faisceau laser de détection, est supprimée grâce à un écrétage de cette intensité pendant la durée de la mesure.

De préférence, pour permettre d'effectuer la comparaison quantitative des mesures effectuées sur les différentes impulsions du faisceau laser de détection, on régule chacune des impulsions incidentes pour rendre ladite valeur constante sensiblement invariable d'une impulsion réfléchie à l'autre.

Avantageusement, on réalise alors à la fois l'écrétage et la régulation de chaque impulsion incidente du faisceau laser de détection dans un même moyen optique modulateur d'intensité lumineuse, asservi électriquement à l'impulsion réfléchie précédente.

Dans une forme de mise en oeuvre préférée du procédé selon l'invention, on détermine le coefficient d'absorption ultrasonore $\alpha$ de la pièce à partir de l'amplitude de deux pics d'intensité successifs correspondant à des échos de fond consécutifs d'une même onde ultrasonore.

De préférence, on détermine alors le coefficient d'absorption ultrasonore $\alpha$ à partir de l'amplitude des deux premiers pics d'intensité.

Pour déterminer ce coefficient $\alpha$ (en dB/mm), dans le cas d'une pièce placée dans un milieu d'impédance très faible, on applique avantageusement la relation :

$$\alpha = \frac{20}{2.E} . \mathrm{Log_{10}} \; (V_{n+1}/V_n)$$

dans laquelle E représente l'épaisseur de la pièce (en mm) et $V_{n+1}/V_n$ représente le rapport des amplitudes de deux pics d'intensité successifs, respectivement d'ordre n+1 et d'ordre n.

L'invention a aussi pour objet une installation de contrôle d'une pièce par ultrasons laser, comprenant :

- des moyens émetteurs, aptes à émettre des impulsions laser incidentes de lumière cohérente monochromatique et à les diriger vers la zone de mesure de la pièce ; et
- des moyens détecteurs aptes à recevoir, pendant un temps de mesure déterminé, l'impulsion de lumière cohérente réfléchie par la pièce, ladite impulsion incluant des décalages Doppler engendrés par des ondes ultrasonores ;

lesdits moyens détecteurs incluant des moyens pour transformer chaque décalage Doppler en un pic d'intensité superposé à l'intensité de l'impulsion réfléchie ;
installation caractérisée en ce que les moyens émetteurs comprennent des moyens optiques pour écrêter l'intensité de chaque impulsion laser incidente et donner à l'intensité de l'impulsion réfléchie une valeur constante pendant une durée au moins égale audit temps de mesure.

**Brève description des dessins**

On décrira à présent, à titre d'exemples non limitatifs, deux modes de réalisation préférés de l'invention, en se référant aux dessins annexés, dans lesquels :

3

- la figure 1 est un schéma synoptique qui représente une installation de détection par laser pour le contrôle ultrasonore d'une pièce selon un premier mode de réalisation de l'invention ;
- la figure 2 représente à titre d'exemple un signal ultrasonore susceptible d'être obtenu avec l'installation de la figure 1 ;
- la figure 3 représente schématiquement un dispositif modulateur d'intensité lumineuse, de type acousto-optique, utilisé dans l'installation de la figure 1 ;
- la figure 4 est la courbe de réponse du dispositif de la figure 3 ;
- les figures 5A à 5D sont des courbes qui représentent l'évolution dans le temps (t) de l'intensité lumineuse (I) d'une impulsion laser, respectivement au moment de son émission, après qu'elle ait été écrêtée, puis régulée, et lorsqu'elle atteint les moyens de détection ;
- les figures 6A et 6B sont des courbes qui représentent l'évolution dans le temps (t) de la longueur d'onde ($\lambda$) d'une impulsion du laser de détection, respectivement incidente et réfléchie ;
- la figure 7 est une vue comparable aux figures 5A à 5D, représentant l'évolution dans le temps (t) de l'intensité lumineuse (I) d'une impulsion du laser de détection, à la sortie de l'interféromètre de Fabry-Pérot ;
- la figure 8 est une courbe qui représente l'évolution dans le temps (t) du signal de sortie (V) du dispositif de détection ; et
- la figure 9 est une vue comparable à la figure 1, illustrant un deuxième mode de réalisation de l'invention.

**Description détaillée de deux modes de réalisation préférés de l'invention**

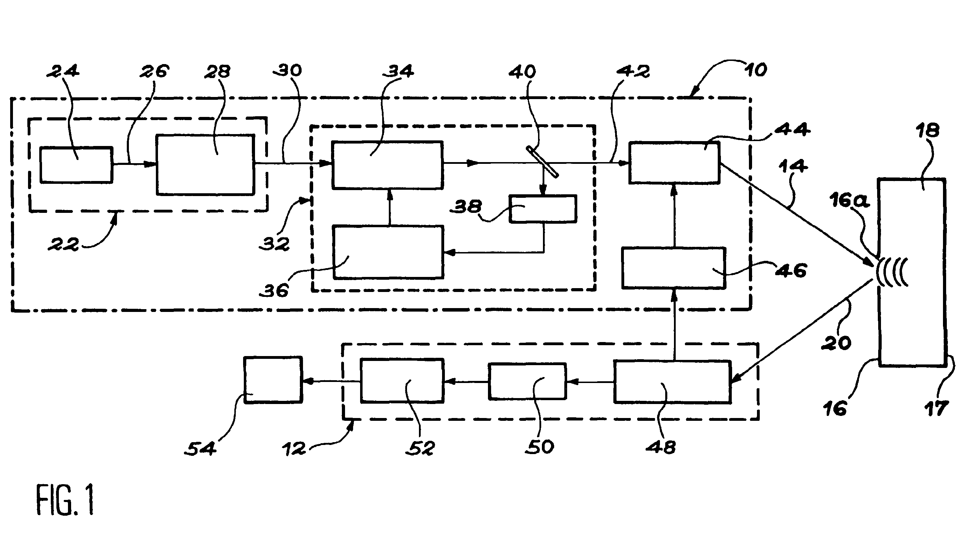

On se référera tout d'abord à la figure 1, qui représente le schéma synoptique d'une installation de détection par laser pour le contrôle non destructif par ultrasons laser selon un premier mode de réalisation de l'invention.

L'installation comprend principalement des moyens émetteurs 10 et des moyens détecteurs 12.

Les moyens émetteurs 10 émettent un faisceau incident 14 de lumière cohérente monochromatique. Ce faisceau 14 du laser de détection est dirigé vers une zone de mesure 16a, sur la face avant 16 de la pièce 18 que l'on désire contrôler. La zone de mesure 16a renvoie le faisceau incident 14, sous la forme d'un faisceau réfléchi 20, vers les moyens détecteurs 12.

Lorsque des ondes ultrasonores ont été générées dans la pièce 18 à contrôler, étant donné que la pièce 18 est placée dans l'air, il y a réflexion quasi-totale de l'onde ultrasonore sur la face arrière 17 de la pièce, puis prorogation dans le matériau jusqu'à la face avant 16, où elle est à nouveau réfléchie, et ainsi de suite.

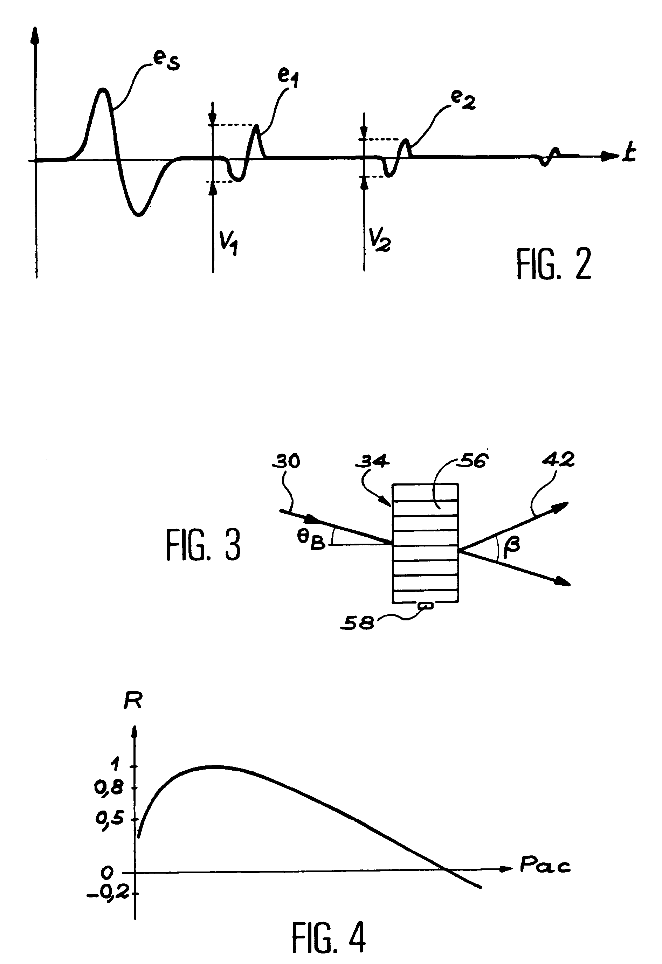

Comme l'illustre schématiquement la figure 2, une onde ultrasonore générée par impact laser se propage dans le matériau et génère ainsi successivement, au cours du temps t, un écho de surface $e_s$, un premier écho de fond $e_1$, un deuxième écho de fond $e_2$, etc..

L'écho de surface $e_s$ n'est pas directement exploitable en vue d'une mesure d'atténuation, du fait qu'il ne correspond pas à un écho ultrasonore mais à un phénomène de dilatation thermique associé à la génération laser.

En revanche, les échos de fond successifs tels que $e_1$ et $e_2$ peuvent être exploités pour mesurer l'atténuation des ondes ultrasonores dans le matériau. Par ailleurs, les échos $e_s$ et $e_1$, ou $e_1$ et $e_2$ peuvent être exploités pour mesurer le temps de parcours des ondes ultrasonores dans le matériau.

Plus précisément, l'atténuation ultrasonore A (en dB) d'un matériau est définie par la relation :

$$A = 20 \ \mathrm{Log_{10}} \ (V_{n+1}/V_n) = A_e + A_s + 2\alpha E \qquad (1)$$

dans laquelle :

- $V_{n+1}/V_n$ représente le rapport de l'amplitude d'un écho de fond d'ordre n + 1 sur celle d'un écho de fond d'ordre n, c'est-à-dire de deux échos de fond successifs (tel que $V_2/V_1$ sur la figure 2) ;
- $A_e$ représente l'atténuation (en dB) sur la face d'entrée de la pièce, due à une réflexion d'une partie de l'énergie ultrasonore qui ne pénètre pas dans la pièce ; et
- $A_s$ représente l'atténuation (en dB) sur le fond de la pièce, due à une transmission d'une partie de l'énergie ultrasonore qui sort de la pièce et ne se réfléchit donc pas sur le fond ;
- $\alpha$ représente le coefficient d'absorption ultrasonore du matériau (en dB/mm) ; et
- E représente l'épaisseur de la pièce (en mm) ; le facteur 2 découle du fait que, la mesure étant effectuée en réflexion, les ultrasons parcourent un trajet aller et retour dans le matériau, c'est-à-dire deux fois l'épaisseur de la pièce.

Dans le cas particulier de la technique des ultrasons laser, du fait que la pièce est placée dans l'air, la réflexion des ultrasons sur la face avant et sur le fond peut être considérée comme totale, de sorte que les termes $A_e$ et $A_s$ sont nuls.

Le coefficient d'absorption ultrasonore $\alpha$ peut donc être calculé en appliquant la relation :

$$A = 20.\text{Log}_{10} (V_{n+1}/V_n) = 2.\alpha.E \qquad (2)$$

Comme l'illustre la figure 1, les moyens émetteurs 10 comprennent un laser de détection 22, constitué d'un oscillateur laser 24 et d'un amplificateur 28, qui multiplie par un gain G l'intensité lumineuse du faisceau laser 26 émis par l'oscillateur laser 24. Le laser 22 ainsi constitué émet des impulsions longues monochromatiques de durée supérieure au temps de mesure désiré. A titre d'exemple, le laser de détection 22 peut être constitué d'un oscillateur de type Nd : YAG et d'un amplificateur de type lampe flash.

Conformément à l'invention, le faisceau amplifié 30 issu du laser 22 traverse ensuite des moyens optiques 32 qui ont pour effet d'écrêter l'intensité lumineuse de chaque impulsion du faisceau incident 14, pour lui donner une valeur constante pendant une durée au moins égale au temps pendant lequel on effectue la mesure à l'aide des moyens détecteurs 12. Par exemple, dans le cas où la technique est utilisée sur une pièce composite de 10 mm d'épaisseur, le temps de mesure doit être d'au moins 15 us.

Les moyens optiques 32 utilisés selon l'invention pour écrêter chaque impulsion du faisceau incident 14 comprennent un dispositif 34 modulateur d'intensité lumineuse, placé sur le trajet du faisceau amplifié 30 issu du laser 22. Ce dispositif 34 modulateur d'intensité lumineuse peut être constitué par tout modulateur optique apte à être asservi, de préférence électriquement, pour assurer la fonction désirée. Il peut notamment s'agir d'un modulateur électro-optique piloté par un champ électrique, ou d'un modulateur acousto-optique tel qu'une cellule de Bragg pilotée par un transducteur piézoélectrique.

A titre d'exemple non limitatif, on décrira à présent plus en détail, en se référant aux figures 3 et 4, le cas où le dispositif 34 modulateur d'intensité lumineuse est de type acousto-optique.

Le dispositif 34 modulateur d'intensité lumineuse comprend alors un matériau transparent 56 (figure 3), traversé par le faisceau 30 (de longueur d'onde $\lambda$), ainsi qu'un générateur d'ondes ultrasonores tel qu'un transducteur piézoélectrique 58. L'actionnement de celui-ci crée des ondes acoustiques planes (de longueur d'onde $\lambda_{us}$) qui se déplacent à vitesse constante dans le matériau.

Dans ces conditions, le matériau agit comme un réseau susceptible de diffracter le faisceau lumineux incident selon un angle $\beta$. En régime de Bragg, l'efficacité de la diffraction est maximale quand le faisceau incident arrive sous une incidence particulière $\theta_B$ appelée incidence de Bragg, définie par la relation :

$$\sin (\theta_\beta) = \frac{\lambda}{2.\lambda_{us}}$$

Si l'on considère que toute l'énergie incidente est soit transmise, soit diffractée par le réseau, le rendement de diffraction R, correspondant au rapport de l'intensité du faisceau diffracté 42 sur l'intensité du faisceau incident 30, est donné par la relation :

$$R = \sin^2 \left\{ \frac{\pi}{\lambda\sqrt{2}} . \sqrt{\frac{L}{H} M.\text{Pac}} \right\} \qquad (3)$$

où

$\lambda$ : longueur d'onde du laser
M : facteur de mérite du matériau
L : longueur du transducteur piézoélectrique
H : hauteur du transducteur piézoélectrique
Pac : puissance acoustique

Cette relation, illustrée par la figure 4, montre qu'en pilotant la puissance acoustique Pac c'est-à-dire le transducteur piézoélectrique 58, il est possible de moduler à volonté l'intensité lumineuse du faisceau diffracté qui constitue le faisceau 42 issu du dispositif modulateur 34.

En se référant à nouveau à la figure 1, on voit que les moyens optiques 32 comprennent en outre un circuit électrique d'asservissement 36, qui pilote directement le dispositif 34 modulateur d'intensité lumineuse, en réponse au signal électrique délivré par une photodiode 38. Les moyens optiques 32 comprennent également une lame de verre 40, placée sur le trajet du faisceau 42 issu du dispositif 34 modulateur d'intensité lumineuse, de façon à réfléchir une infime partie de ce faisceau 42 vers la photodiode 38. Le très faible coefficient de réflexion de la lame de verre 40 permet d'induire des pertes optiques minimales sur le faisceau 42. La fraction réfléchie du faisceau dirigée sur la photodiode 38 est toujours suffisante pour que cette dernière soit apte à fournir au circuit électrique d'asservissement 36 le signal d'entrée nécessaire au pilotage du dispositif 34 modulateur d'intensité lumineuse.

Le faisceau laser de détection écrêté 42 issu des moyens optiques 32 pénètre ensuite dans des moyens 44 pour réguler l'intensité lumineuse de chacune des impulsions du faisceau. Dans la pratique, ces moyens de régulation 44 sont des moyens optiques qui modulent de façon uniforme, en l'atténuant d'un facteur $\gamma$, l'intensité lumineuse du faisceau 42. Par conséquent, le faisceau incident 14 qui vient heurter la face avant 16 de la pièce 18 est un faisceau dont l'impulsion est écrêtée par les moyens optiques 32, puis atténuée par les moyens régulateurs 44.

Les moyens régulateurs 44 sont pilotés par des moyens de régulation 46 sensibles à un signal représentatif de l'intensité lumineuse de chacune des impulsions du faisceau réfléchi 20, à l'entrée des moyens détecteurs 12. Ce pilotage vise à rendre sensiblement invariable, d'une impulsion réfléchie à l'autre, la valeur constante donnée à l'intensité de chacune de ces impulsions par les moyens optiques 32.

Dans la pratique, les moyens régulateurs 44 peuvent prendre différentes formes, sans sortir du cadre de l'invention.

Dans le mode de réalisation illustré sur la figure 1, les moyens régulateurs 44 peuvent être constitués par un organe optique mobile, tel qu'un disque rotatif, dont la partie apte à être placée dans l'axe du faisceau 42 présente un coefficient de transmission variable. Les moyens d'asservissement 46 comprennent alors un moteur commandant mécaniquement le déplacement de cet organe optique, ainsi qu'un circuit électrique d'asservissement, sensible à un signal représentatif de l'intensité lumineuse des impulsions réfléchies qui pénètrent dans les moyens détecteurs 12, pour commander une mise en oeuvre précise du moteur lorsqu'un déplacement de l'organe optique s'avère nécessaire.

Les moyens régulateurs 44 peuvent aussi comprendre un modulateur d'intensité lumineuse de type électro-optique ou acousto-optique comparable au modulateur 34. Dans ce cas, les moyens de régulation 46 sont constitués uniquement par un circuit électrique d'asservissement comparable au circuit 36.

Comme l'illustre très schématiquement la figure 1, les moyens détecteurs 12 comprennent, dans l'ordre, un interféromètre de Fabry-Pérot 48, un circuit électronique de détection 50 et un filtre passe-haut 52.

L'interféromètre de Fabry-Pérot 48 constitue un moyen pour transformer les décalages Doppler présents sur les impulsions du faisceau réfléchi 20, en pics d'intensité qui viennent se superposer à l'intensité lumineuse de chacune de ces impulsions. Le fonctionnement de cet interféromètre est décrit en détail dans le document US-A-4 659 224, auquel on pourra se reporter, si nécessaire.

Le circuit électronique de détection 50 transforme l'intensité lumineuse du signal issu de l'interféromètre 48 en un signal électrique dont la tension est représentative de cette intensité lumineuse.

Le filtre passe-haut 52 ne garde du signal électrique issu du circuit 50 que les parties correspondant aux variations d'intensité issues des décalages Doppler.

Avantageusement, des moyens de calcul 54 déterminent le coefficient d'absorption ultrasonore de la pièce 18 en cours de contrôle, à partir du signal issu du filtre passe-haut 52 et en appliquant la relation (2). Ainsi, les moyens de calcul 54, constitués par exemple par un micro-ordinateur, comparent l'amplitude de deux pics d'intensité successifs correspondant à des échos de fond consécutifs d'une même onde ultrasonore. Plus précisément, ils comparent de préférence les deux premiers pics d'intensité situés après l'écho de surface.

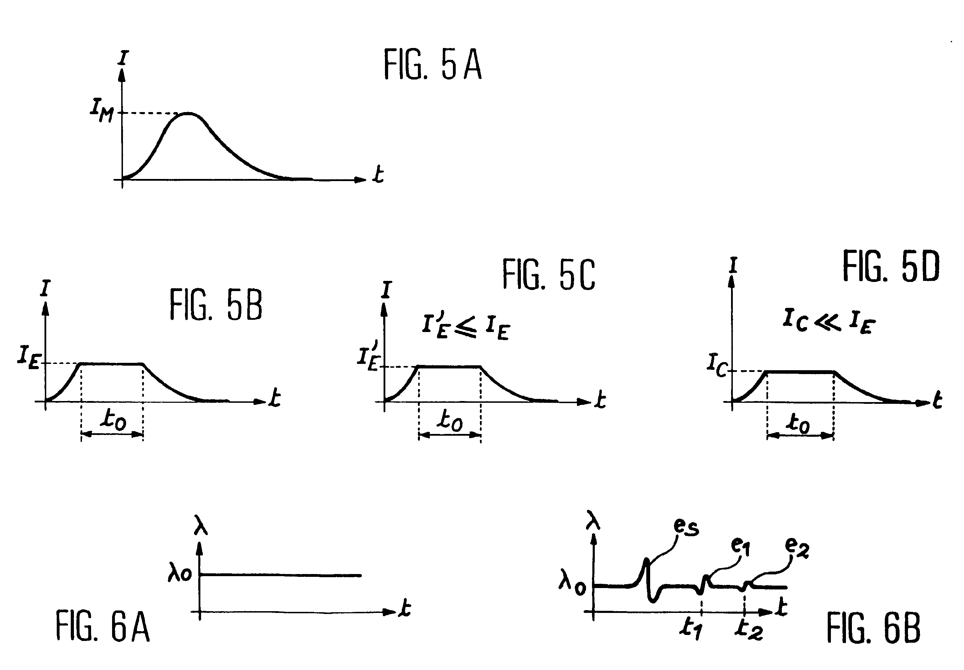

La technique de détection et d'exploitation des échos de fond $e_1$, $e_2$, etc., va à présent être décrite plus en détail en se référant aux figures 5A à 5D ainsi qu'aux figures 6A, 6B, 7 et 8.

Sur la figure 5A, on a représenté l'évolution dans le temps t de l'intensité lumineuse I d'une impulsion du faisceau 30 émis par le laser 22. Cette évolution présente une forme quasi gaussienne. Ainsi, l'intensité I augmente progressivement pour atteindre une valeur maximale $I_M$, puis elle décroît progressivement avec le temps. La longueur d'onde $\lambda$ de l'impulsion lumineuse présente par ailleurs une valeur constante, égale à $\lambda_0$, (figure 6A).

Comme l'illustre la figure 5B, à la sortie des moyens optiques 32, l'intensité de chacune des impulsions du faisceau laser 42 est écrêtée, de façon à présenter une valeur constante $I_E$ pendant une durée t0 au moins égale au temps de mesure, c'est-à-dire à 20 us dans l'exemple décrit. La longueur d'onde reste constante et égale à $\lambda_0$. A la sortie des moyens de régulation 44, et comme l'illustre la figure 5C, l'intensité lumineuse de chacune des impulsions du faisceau incident 14 garde la même allure que sur la figure 5B, mais subit une atténuation, déterminée par les moyens de régulation 46, afin que l'intensité lumineuse des impulsions du faisceau réfléchi 20 qui pénètrent dans les moyens détecteurs 12 soit sensiblement invariable, d'une impulsion à l'autre. Ainsi, l'intensité lumineuse de chaque impulsion du faisceau incident 14 reste à une valeur $I_E'$ constante pendant la période t0, ($I_E' \leq I_E$). Comme précédemment, la longueur d'onde reste constante et égale à $\lambda_0$.

Comme on l'a représenté sur la figure 5D, chacune des impulsions du faisceau réfléchi 20 parvenant à l'entrée des moyens détecteurs 12 présente, grâce à l'action combinée des moyens optiques 32 et des moyens régulateurs 44, une intensité lumineuse d'écrétage $I_c$ qui reste constante pendant une durée t0 au moins égale au temps de la mesure, cette intensité $I_c$ étant en outre sensiblement invariable d'une impulsion à l'autre.

Par ailleurs, comme l'illustre la figure 6B, la longueur d'onde λ des impulsions réfléchies présente des variations telles que $e_1$ et $e_2$, aux instants $t_1$ et $t_2$, autour de la longueur d'onde constante $\lambda_0$. Ces variations correspondent à l'arrivée des échos ultrasonores sur la face avant 16 de la pièce 18.

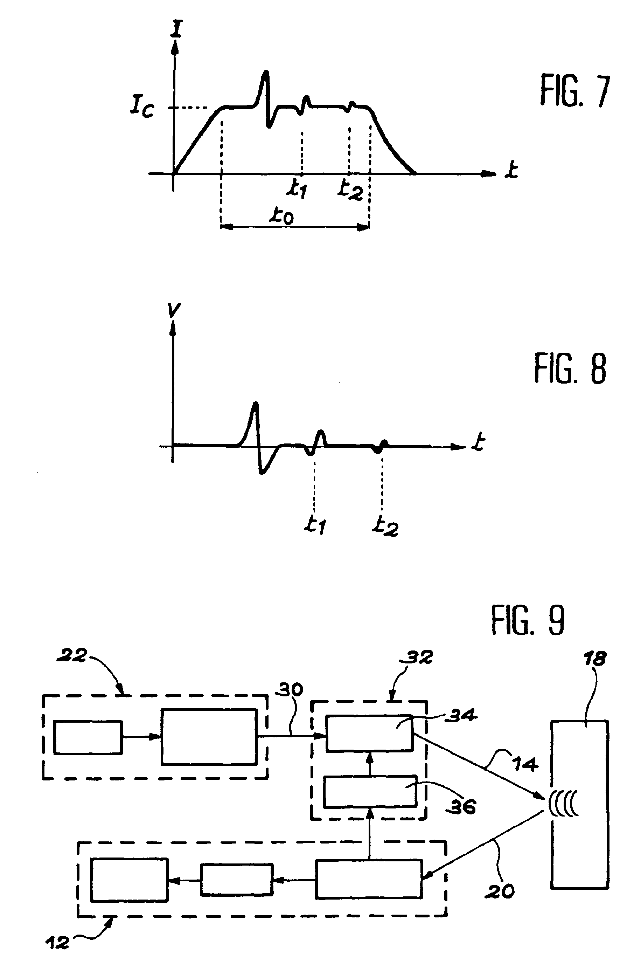

Comme on l'a illustré sur la figure 7, l'interféromètre de Fabry-Pérot 48 a pratiquement pour effet de superposer à la courbe de la figure 5D, représentative de l'intensité lumineuse de chacune des impulsions du faisceau réfléchi 20, les signaux représentatifs des pics de fréquence, en transformant ces derniers en pics d'intensité lumineuse. Chacun de ces pics, tels que ceux qui apparaissent aux instants $t_1$ et $t_2$ sur la figure 7, apparaît ainsi sur la partie en palier ou écrêtée, d'intensité $I_c$, de la courbe représentative de l'intensité lumineuse I de l'impulsion. Cette caractéristique, propre au procédé et à l'installation selon l'invention, permet d'effectuer une comparaison quantitative précise de la tension de chacun des pics d'intensité lumineuse, puisque l'intensité $I_c$ du signal sur lequel prend naissance chaque pic est constante.

Pour parvenir à ce résultat et d'une manière qui est décrite en détail dans le document US-A-4 659 224 déjà cité, on ajuste la longueur de la cavité de l'interféromètre 48 afin que la longueur d'onde $\lambda_0$ du laser de détection 22 tombe à mi-hauteur de la courbe de réponse de l'interféromètre (cette courbe représentant l'évolution de l'intensité lumineuse de sortie de l'appareil en fonction de la longueur d'onde).

Après être passé par le dispositif détecteur 50, qui transforme le signal d'intensité lumineuse de la figure 7 en un signal de tension, le filtre passe-haut 52 ne garde de ce signal de tension que la partie constante portant les pics de tension, comme l'illustre la figure 8.

La description qui précède montre que le procédé et l'installation conformes à l'invention permettent de détecter des pics de tension représentatifs des échos ultrasonores générés dans la pièce, en appuyant ces pics de tension sur un niveau de tension constant pendant toute la durée de la mesure et, de préférence, de manière telle que ce niveau de tension constant soit sensiblement invariable d'une impulsion à une autre à l'entrée des moyens détecteurs.

La première caractéristique, essentielle à l'invention, est assurée par l'écrétage du signal délivré par le laser 22, assuré par les moyens optiques 32.

La deuxième caractéristique, préférée mais non essentielle, est obtenue grâce aux moyens de régulation 44 des impulsions du faisceau incident.

Du fait que les pics de tension représentatifs des échos ultrasonores prennent appui sur une tension de référence constante, ce qui assure une stabilité de la sensibilité, il devient possible de comparer quantitativement les amplitudes de ces pics de tension, notamment pour calculer le coefficient d'absorption ultrasonore α, en appliquant la relation 2 énoncée précédemment. L'atténuation des ondes ultrasonores dans le matériau peut ainsi être déterminée soit manuellement, soit à l'aide des moyens calculateurs 54 de la figure 1. Cela permet notamment d'évaluer la santé du matériau en relevant la présence d'hétérogénéités de manière absolue, c'est-à-dire sans qu'il soit nécessaire de procéder à des comparaisons avec les mesures effectuées sur d'autres régions de la pièce réputées saines.

Selon un deuxième mode de réalisation de l'invention, illustré sur la figure 9, les moyens optiques 32, modulateurs de l'intensité lumineuse du faisceau émis par le laser 22 assurent simultanément la fonction des moyens régulateurs 44 sur la figure 1. En d'autres termes, les moyens optiques 32 assurent à la fois l'écrétage de l'intensité lumineuse du faisceau 30 délivré par le laser 22, pendant une durée to au moins égale au temps de la mesure, et une atténuation de cette intensité lumineuse, déterminée pour rendre constante l'intensité lumineuse de chaque impulsion du faisceau réfléchi 20 qui pénètre dans les moyens détecteurs 12.

A cet effet, les moyens optiques 32 comprennent un dispositif 34 modulateur d'intensité lumineuse, tel qu'un modulateur électro-optique ou acousto-optique, placé sur le trajet du faisceau 30 émis par le laser 22, ainsi qu'un circuit électrique d'asservissement 36. Ce circuit 36 pilote le modulateur 34 en réponse à un signal représentatif de l'intensité lumineuse de chaque impulsion à l'entrée des moyens détecteurs 12. Ce signal peut être obtenu par des moyens analogues à ceux qui ont été décrits en référence à la figure 1, c'est-à-dire une lame de verre telle que la lame de verre 40, placée à l'entrée des moyens détecteurs 12, ainsi qu'une photodiode analogue à la photodiode 38 sur la figure 1, transformant le signal lumineux réfléchi par la lame de verre en un signal électrique apte à être transmis au circuit électrique de commande 36.

Cet agencement a pour avantage de simplifier l'installation en diminuant le nombre de composants optiques et, par conséquent, d'en réduire le coût.

De plus, du fait que le modulateur 34 est piloté directement par un circuit électrique 36, le temps de réponse est minimal. En effet, le niveau d'écrétage d'une impulsion donnée est fixé à partir du niveau de l'impulsion précédente, lorsque celle-ci atteint l'entrée des moyens détecteurs 12. Il est à noter que cet avantage existe également dans l'installation de la figure 1, lorsqu'on utilise un modulateur électro-optique ou acousto- optique piloté électroniquement, à la place d'un modulateur commandé mécaniquement.

Enfin, du fait qu'aucun prélèvement n'est effectué sur le faisceau issu du laser 22, les pertes sont réduites par rapport à l'installation de la figure 1, ce qui améliore encore les performances du système.

**Revendications**

1. Procédé de contrôle d'une pièce (18) par ultrasons laser, selon lequel :

    - on dirige un faisceau de détection, issu d'un laser impulsionnel, sur une zone de mesure (16a) de la pièce (18) ;
    - on détecte l'impulsion laser réfléchie par la pièce, pendant un temps de mesure déterminé, ladite impulsion incluant des décalages Doppler engendrés par la réflexion d'ondes ultrasonores sur ladite zone de mesure ; et
    - on transforme chaque décalage Doppler en un pic d'intensité superposé à l'intensité de l'impulsion réfléchie ;

    procédé **caractérisé en ce qu'**on écrête l'intensité de chaque impulsion incidente du faisceau laser de détection, pour donner à l'intensité de l'impulsion réfléchie une valeur constante pendant une durée au moins égale audit temps de mesure.

2. Procédé selon la revendication 1, dans lequel on régule chaque impulsion incidente, pour rendre ladite valeur constante sensiblement invariable d'une impulsion réfléchie à l'autre.

3. Procédé selon la revendication 2, dans lequel on écrête et on régule chaque impulsion incidente dans un même moyen optique (32) modulateur d'intensité lumineuse, asservi électriquement à l'impulsion réfléchie précédente.

4. Procédé selon l'une quelconque des précédentes, dans lequel on détermine le coefficient d'absorption ultrasonore $\alpha$ de la pièce à partir de l'amplitude de deux pics d'intensité successifs, correspondant à des échos de fond consécutifs d'une même onde ultrasonore.

5. Procédé selon la revendication 4, dans lequel on détermine le coefficient d'absorption ultrasonore $\alpha$ à partir de l'amplitude des deux premiers pics d'intensité.

6. Procédé selon l'une quelconque des 4 et 5, dans lequel on détermine le coefficient d'absorption ultrasonore $\alpha$ (en dB/mm), en appliquant la relation :

$$\alpha = \frac{20}{2.E} . \mathrm{Log}_{10} \ (V_{n+1}/V_n)$$

dans laquelle E représente l'épaisseur de la pièce (en mm) et $V_{n+1}V_n$ représente le rapport des amplitudes de deux pics d'intensité successifs, respectivement d'ordre n+1 et d'ordre n.

7. installation de contrôle d'une pièce (18) par ultrasons laser, comprenant :

    - des moyens émetteurs (10), aptes à émettre des impulsions laser incidentes de lumière cohérente monochromatique et à les diriger vers une zone de mesure (16) de la pièce ; et
    - des moyens détecteurs (12) aptes à recevoir, pendant un temps de mesure déterminé, l'impulsion de lumière cohérente réfléchie par la pièce, ladite impulsion incluant des décalages Doppler engendrés par des ondes ultrasonores ;

    lesdits moyens détecteurs (12) incluant des moyens (48) pour transformer chaque décalage Doppler en un pic d'intensité, superposé à l'intensité de l'impulsion réfléchie ;
    installation **caractérisée en ce que** les moyens émetteurs (10) comprennent des moyens optiques (32) pour écrêter l'intensité de chaque impulsion laser incidente et donner à l'intensité de l'impulsion réfléchie une valeur constante pendant une durée au moins égale audit temps de mesure.

8. Installation selon la revendication 7, dans laquelle les moyens émetteurs (10) comprennent des moyens (44) pour réguler chaque impulsion laser incidente, de façon à rendre ladite valeur constante sensiblement invariable d'une impulsion réfléchie à l'autre.

9. Installation selon la revendication 8, dans laquelle un même moyen optique (32) modulateur d'intensité lumineuse constitue à la fois les moyens pour écrêter l'intensité de chaque impulsion incidente et les moyens pour réguler celle-ci.

**10.** Installation selon la revendication 9, dans laquelle ledit moyen optique (32) modulateur d'intensité lumineuse est asservi électriquement à l'impulsion réfléchie précédente.

**11.** Installation selon l'une quelconque des revendications 7 à 10, dans lequel les moyens détecteurs (12) incluent des moyens (54) pour déterminer le coefficient d'absorption ultrasonore de la pièce (18) à partir de l'amplitude de deux pics d'intensité successifs correspondant à des échos de fond consécutifs d'une même onde ultrasonore.

**12.** Installation selon la revendication 11, dans laquelle lesdits moyens (54) pour déterminer le coefficient d'absorption ultrasonore $\alpha$ (en dB/mm) de la pièce comprennent un calculateur, qui applique la relation :

$$\alpha = \frac{20}{2.E} . \mathrm{Log_{10}} \ (V_{n+1}/V_n)$$

dans laquelle E représente l'épaisseur de la pièce (en mm) et $V_{n+1}/V_n$ représente le rapport des amplitudes de deux pics d'intensité successifs, respectivement d'ordre n+1 et d'ordre n.

**Claims**

**1.** Method for inspecting a workpiece (18) by laser ultrasound (18), wherein:

- a detection beam emitted by a laser pulse is directed onto a measurement zone (16a) on the workpiece (18);
- the laser pulse reflected by the workpiece is detected over a predetermined measurement time, said pulse including Doppler shifts generated by the reflection of ultrasound waves on said measurement zone, and
- each Doppler shift is transformed into an intensity peak superimposed on the reflected pulse intensity;

said method being **characterised in that** the intensity of each incident pulse of the detection laser is evened out in order to give the reflected pulse intensity a constant value over a period at least equal to said measurement time.

**2.** Method according to claim 1, wherein each incident pulse is regulated in order to render said constant value substantially invariable from one reflected pulse to another.

**3.** Method according to claim 2, wherein each incident pulse is evened out and regulated in the same optical means (32) for modulating the light intensity, electrically slaved to the preceding reflected pulse.

**4.** Method according to any of the preceding claims, wherein the coefficient of ultrasound absorption $\alpha$ of the workpiece is determined using the amplitude of two successive intensity peaks corresponding to consecutive bottom echoes of the same ultrasound wave.

**5.** Method according to claim 4, wherein the coefficient of ultrasound absorption $\alpha$ is determined using the amplitude of the first two intensity peaks.

**6.** Method according to any of claims 4 and 5, wherein the coefficient of ultrasound absorption $\alpha$ is determined (in dB/mm) by applying the following relationship:

$$\alpha = \frac{20}{2.E} . Log_{10} \left( V_{n+1}/V_n \right)$$

wherein E represents the thickness of the workpiece (in mm) and $V_{n+1}/V_n$ represents the ratio of the amplitudes of the two successive intensity peaks, respectively, of the order of $n + 1$ and the order of $n$.

**7.** Inspection installation for a workpiece (18) by means of laser ultrasound, comprising:

- the emitting means (10) capable of emitting incident laser pulses of coherent monochromatic light and directing them towards a measurement zone (16) of the workpiece, and
- detection means (12) capable of receiving the coherent light pulse reflected by the workpiece over a determined period of time, said pulse including the Doppler shifts generated by the ultrasound waves,

said detecting means (12) including means (48) for transforming each Doppler shift into an intensity peak superimposed on the intensity of the reflected pulse;
installation **characterised in that** the emission means (10) comprise optical means (32) for evening out the intensity of each incident laser pulse and applying a constant value to the intensity of each reflected pulse over a period at least equal to said measurement time.

8. Installation according to claim 7, wherein the emitting means (10) comprise means (44) for regulating each incident laser pulse in such a fashion as to make said constant value substantially invariable from one reflected pulse to another.

9. Installation according to claim 8, wherein the same optical means (32) for modulating light intensity comprises both the means for evening out the intensity of each incident pulse and the means for regulating this same incident pulse.

10. Installation according to claim 9, wherein said optical means (32) for modulating the light intensity is electrically slaved to the preceding reflected pulse.

11. Installation according to any of claims 7 to 10, wherein the detecting means (12) include means (54) for determining the coefficient of ultrasound absorption of the workpiece (18) using the amplitude of the two successive intensity peaks corresponding to consecutive bottom echoes of a same ultrasound wave.

12. Installation according to claim 11, wherein said means (54) for determining the coefficient of ultrasound absorption $\alpha$ (in dB/mm) of the workpiece comprise a calculator that applies the relationship:

$$\alpha = \frac{20}{2.E} \cdot Log_{10}\left(V_{n+1}/V_n\right)$$

wherein E represents the thickness of the workpiece (in mm) and $V_{n+1}/V_n$ represents the ratio of the amplitudes of the two successive intensity peaks, respectively of the order of $n + 1$ and the order of $n$.

**Patentansprüche**

1. Verfahren zur Kontrolle eines Werkstücks (18) mittels Laser-Ultraschall, wobei:

- man einen aus einem gepulsten Laser stammenden Erfassungsstrahl auf eine Messzone (16a) des Werkstücks (18) richtet;
- man den vom Werkstück reflektierten Laserpuls während einer vorbestimmten Messzeit erfasst, wobei der Puls Dopplerverschiebungen enthält, die durch die Reflexion von Ultraschallwellen an der Messzone erzeugt sind, und
- man jede Dopplerverschiebung in eine Intensitätsspitze transformiert, die der Intensität des reflektierten Pulses überlagert ist,

wobei das Verfahren **dadurch gekennzeichnet ist, dass** man die Intensität jedes einfallenden Pulses des Erfassungslaserstrahls begrenzt, um der Intensität des reflektierten Pulses eine konstanten Wert zu geben, und zwar während einer Dauer, die wenigstens gleich der Messzeit ist.

2. Verfahren nach Anspruch 1, bei dem man jeden einfallenden Puls regelt, um den konstanten Wert von einem reflektierten Puls zum anderen im Wesentlichen unveränderlich zu machen.

3. Verfahren nach Anspruch 2, bei dem man jeden einfallenden Puls in ein und der selben optischen Lichtintensitäts-Modulatoreinrichtung (32) begrenzt und regelt, die elektrisch mit dem vorhergehenden reflektierten Puls geregelt wird.

**4.** Verfahren nach einem der vorhergehenden Ansprüche, bei dem man den Ultraschall-Absorptionskoeffizienten $\alpha$ des Werkstücks ausgehend von der Amplitude von zwei aufeinanderfolgenden Intensitätsspitzen bestimmt, entsprechend aufeinanderfolgenden Rückwandechos ein und derselben Ultraschallwelle.

**5.** Verfahren nach Anspruch 4, bei dem man den Ultraschall-Absorptionskoeffizienten $\alpha$ ausgehend von der Amplitude der zwei ersten Intensitätsspitzen bestimmt.

**6.** Verfahren nach einem der Ansprüche 4 und 5, bei dem man den Ultraschall-Absorptionskoeffizienten $\alpha$ (in dB/mm) unter Anwendung der Relation:

$$\alpha = \frac{20}{2.E} \cdot Log_{10}\left(V_{n+1}/V_n\right)$$

bestimmt, wobei E die Dicke des Werkstücks (in mm) darstellt und $V_{n+1}/V_n$ das Amplitudenverhältnis von zwei aufeinanderfolgenden Intensitätsspitzen der Ordnung n+1 bzw. der Ordnung n darstellt.

**7.** Vorrichtung zur Kontrolle eines Werkstücks (18) mittels Laser-Ultraschall, umfassend:

- Sendemittel (10), die dazu ausgelegt sind, einfallende Laserpulse aus kohärentem monochromatischem Licht auszusenden und sie auf eine Messzone (16) des Werkstücks zu richten; und
- Erfassungsmittel (12), die dazu ausgelegt sind, während einer vorbestimmten Messzeit den vom Werkstück reflektierten kohärenten Lichtpuls zu empfangen, wobei der Puls Dopplerverschiebungen enthält, die durch Ultraschallwellen erzeugt sind;

wobei die Erfassungsmittel (12) Mittel (48) zum Transformieren jeder Dopplerverschiebung in eine Intensitätsspitze umfassen, die der Intensität des reflektierten Pulses überlagert ist;
wobei die Vorrichtung **dadurch gekennzeichnet ist, dass** die Sendemittel (10) optische Mittel (32) umfassen, um die Intensität jedes einfallenden Laserpulses zu begrenzen, und um der Intensität des reflektierten Pulses einen konstanten Wert zu geben, und zwar während einer Dauer, die wenigstens gleich der Messzeit ist.

**8.** Vorrichtung nach Anspruch 7, bei der die Sendemittel (10) Mittel (44) zum Regeln jedes einfallenden Laserpulses derart umfassen, dass der konstante Wert von einem reflektierten Puls zum anderen im Wesentlichen unveränderlich gemacht wird.

**9.** Vorrichtung nach Anspruch 8, bei der ein und dieselbe optische Lichtintensitäts-Modulatoreinrichtung (32) gleichzeitig die Mittel zum Begrenzen der Intensität jedes einfallenden Pulses und die Mittel zum Regeln desselben darstellt.

**10.** Vorrichtung nach Anspruch 9, bei der die optische Lichtintensitäts-Modulatoreinrichtung (32) elektrisch mit dem vorhergehenden reflektierten Puls geregelt wird.

**11.** Vorrichtung nach einem der Ansprüche 7 bis 10, bei der die Erfassungsmittel (12) Mittel (54) zur Bestimmung des Ultraschall-Absorptionskoeffizienten des Werkstücks (18) ausgehend von der Amplitude von zwei aufeinanderfolgenden Intensitätsspitzen umfassen, entsprechend aufeinanderfolgenden Rückwandechos ein und derselben Ultraschallwelle.

**12.** Vorrichtung nach Anspruch 11, bei der die Mittel (54) zur Bestimmung des Ultraschall-Absorptionskoeffizientien $\alpha$ (in dB/mm) des Werkstücks einen Rechner umfasst, der die Relation anwendet:

$$\alpha = \frac{20}{2.E} \cdot Log_{10}\left(V_{n+1}/V_n\right)$$

bei der E die Dicke des Werkstücks (in mm) darstellt, und $V_{n+1}/V_n$ das Amplitudenverhältnis von zwei aufeinanderfolgenden Intensitätsspitzen der Ordnung n+1 bzw. der Ordnung n darstellt.

FIG.1

FIG. 2

FIG. 3

FIG. 4

FIG. 5A

FIG. 5B

FIG. 5C

FIG. 5D

FIG. 6A

FIG. 6B

FIG. 7

FIG. 8

FIG. 9

**RÉFÉRENCES CITÉES DANS LA DESCRIPTION**

**Documents brevets cités dans la description**

*   US 4659224 A